# EUROPEAN PATENT SPECIFICATION

(11) **EP 2 860 478 B1**
(45) Date of publication and mention of the grant of the patent: **27.12.2017**
(21) Application number: 13801002.0
(22) Date of filing: 07.06.2013
(51) Int. Cl.: F25D 23/00, H02G 3/30

(54) **REFRIGERATOR**
KÜHLSCHRANK
RÉFRIGÉRATEUR

(30) Priority: 07.06.2012 JP 2012129596
(43) Date of publication of application: 15.04.2015
(73) Proprietor: Samsung Electronics Co., Ltd., Gyeonggi-do 16677 (KR)
(72) Inventor: SUZUKI, Toshiaki, Minoh-shi Osaka 562-0036 (JP); SODA, Yasushi, Minoh-shi Osaka 562-0036 (JP)
(74) Representative: Walaski, Jan Filip
(86) International application number: PCT/JP2013/003606
(87) International publication number: WO 2013/183304

(56) References cited:
- EP-A1- 1 174 747
- DE-A1- 10 050 279
- DE-A1-102005 004 453
- JP-A- S6 431 309
- JP-A- H07 222 332
- JP-A- H07 222 332
- JP-A- 2006 162 144
- JP-A- 2012 002 394
- US-A- 5 937 745
- US-A1- 2002 088 644
- US-A1- 2004 135 039
- US-A1- 2011 099 775
- US-A1- 2012 077 371

## Description

The present invention relates to a refrigerator, particularly to a technique to improve an internal volume ratio and heat insulation efficiency of a refrigerator.

In general, a cabinet of a refrigerator consists of an inner case and an outer case and a heat insulation layer is formed in a space between the inner case and the outer case. The heat insulation layer is formed by combining the inner case with the outer case and then injecting urethane foam or the like from an inlet of the outer case to foam and harden the same therein. In addition, a wire harness with a bundle of various wires is housed in the space between the inner case and outer case of the refrigerator. The wire harness is embedded in a foam insulation material in a process of forming the heat insulation layer.

In recent years, the refrigerator shows a technical tendency that a thickness of the foam insulation material becomes increasingly thinner by improvement in internal volume ratio of the refrigerator, utilization of a VIP (Vacuum Insulation Panel), etc. In addition, the number of wires tends to increase due to increase in the number of various sensors and devices in the refrigerator. For this reason, nowadays there is also a refrigerator configured such that a thickness of a foam insulation material is nearly equal to a diameter of a bundle of wires in a wire harness. Accordingly, the thickness of the foam insulation material may not be sufficiently secured at a portion at which the wire harness is present, and foaming defects, such as a void caused by inhibition of a flow channel of urethane foam, are generated. As a result, serious problems such as condensation are brought about by deterioration of heat insulation properties of the foam insulation material.

As countermeasures to the above problems, an example of using a plate-like harness assembly in which a variety of wires are interposed and adhered by sheet materials is conventionally disclosed (for instance, see Patent Document 1). In addition, an example in which grooves are provided on corner portions of an inner case and a variety of wires are housed in the grooves is disclosed (for instance, see Patent Document 2). In addition, an example in which a flat cable configured in a band shape by bonding and flattening a variety of wires is used as a wire harness is disclosed, although it is not intended to improve heat insulation efficiency of a refrigerator (for instance, see Patent Document 3).

JP H07 222332 relates to a refrigerator having a fixing unit for a wire harness. EP1174747 relates to a tool for retaining optical fibres.

### [Citation List]

Patent Document 1: Japanese Unexamined Patent Application Publication No. 5-205532
Patent Document 2: Japanese Unexamined Patent Application Publication No. 2006-162144
Patent Document 3: Japanese Unexamined Patent Application Publication No. 7-294104

The flat cable has a problem in that it is difficult to ensure electric insulation properties due to tearing of bridge portions or to automatically carry out caulking operation of terminals. In addition, overall cost is increased because a pressure connector is expensive. In addition, in the harness assembly in which a variety of wires are interposed and adhered by sheet materials, heat insulation properties are deteriorated since a foam flow portion other than necessary portions is inhibited by the sheet materials, and furthermore, overall cost is increased due to use of the sheet materials. Accordingly, it is disadvantageous to use the above manner as a wire harness. Meanwhile, a method of providing the grooves on the corner portions of the inner case and performing chamfering of the corner portions is undesirable since the inner volume ratio of the refrigerator is decreased.

Therefore, the present invention has been made in view of the above problems, and it is an object of the present invention to improve an internal volume ratio and heat insulation efficiency of a refrigerator at relatively low cost.

A refrigerator in accordance with an aspect of the present invention is a refrigerator in which a foam insulation material is filled in a space between an inner case and an outer case and a wire harness with a bundle of a plurality of wires is embedded in the foam insulation material, wherein in the wire harness, the wires are bound and flattened in at least one position thereof by binding tools, at least one of the binding tools is curved or bent about an extension direction of the wires, and in a corner portion at which two surfaces of the inner case intersect, the curved or bent binding tool is attached to the inner case so as to wrap the corner portion.

In addition, the binding tools may each be made of a flexible material. Specifically, each of the binding tools may include a base portion having a flexible plate shape, a tie portion having a long shape, one end of the tie portion being integrally formed with one end of the base portion, and a hook portion provided on a surface of the base portion so as to protrude in a vertical direction in planar view, and configured to hook the tie portion in at least one position thereof such that the tie portion is freely movable in an extension direction, while suppressing the tie portion from being separated in a vertical direction of the base portion in planar view. The wires may be interposed between the base portion and the tie portion.

In accordance with the present invention, a wire harness may be configured at low cost and at the same time foaming defects such as a void may be eliminated by sufficiently securing a flow channel of urethane foam when a heat insulation layer is formed. In addition, a plurality of wires may be arranged at a corner portion of an inner case without provision of grooves and chamfering of the corner portion. Consequently, an internal volume ratio and heat insulation efficiency of a refrigerator may be improved at relatively low cost.

According to an aspect of the present invention, there is provided a refrigerator according to claim 1. Optional features are set out in the dependent claims.

### [Description of Drawings]

The above and other objects, features and other advantages of the present invention will be more clearly understood from the following detailed description taken in conjunction with the accompanying drawings, in which:
FIG. 1 is a view schematically illustrating a cabinet structure of a refrigerator according to an embodiment of the present invention;
FIG. 2 is a cross-sectional view of the refrigerator according to the embodiment of the present invention;
FIG. 3 is a view illustrating a configuration of a binding tool according to the embodiment; and
FIG. 4 is a view schematically illustrating a use state of the binding tool in FIG. 3.

### [Best Mode]

Hereinafter, an embodiment of the present invention will be described with reference to the drawings. Throughout the disclosure, like reference numerals refer to like parts throughout the various figures and embodiment of the present invention. Moreover, the present invention is not limited to the following embodiment.

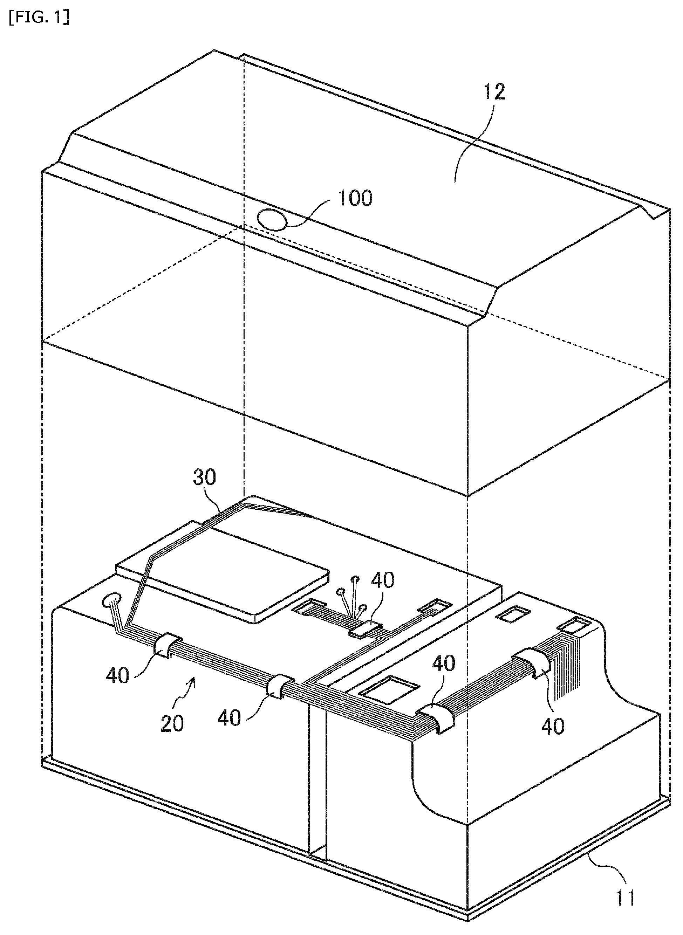

FIG. 1 schematically shows a cabinet structure of a refrigerator according to an embodiment of the present invention. A cabinet of a refrigerator consists of an inner case 11 and an outer case 12. When the inner case 11 is combined with the outer case 12, a space with a thickness of several tens of mm is defined therebetween. Urethane foam or the like is injected from an inlet 100 opened to a surface of the outer case 12 to be foamed and hardened in the space between the inner case 11 and the outer case 12, and thus a heat insulation layer is formed between the inner case 11 and the outer case 12. A VIP is also used together in order to make the heat insulation layer thinner and improve heat insulation efficiency. In this case, the VIP is typically adhered to an inner surface of the outer case 12.

A wire harness 20 is attached to the inner case 11. The wire harness 20 is embedded in a foam insulation material in the heat insulation layer. In addition, various devices are also attached to the inner case 11 besides the wire harness 20, but are not shown for convenience of description.

The wire harness 20 binds a plurality of wires 30 in at least one position thereof by an associated binding tool 40. Each wire 30 is an electric wire to supply electric power and signals to various devices and sensors (not shown), etc. The wire 30 has a variety of lengths and thicknesses. Although not shown, a terminal of each wire 30 is processed, and the proper number of plugs or connectors is attached thereto.

The number of wires 30 bound by one binding tool 40 is often several tens of wires. In the wire harness 20, a plurality of wires 30 is not bound and rounded but is bound and flattened using the binding tools 40. That is, in the wire harness 20, the wires 30 are bound and flattened in at least one position thereof by the associated binding tool 40.

Bound portions by the binding tools 40 are desirably thin, namely, as flat as possible. For example, when all thicknesses of bundles of wires 30 bound by the binding tools 40 are equal, the wires 30 are widely bound so as not to overlap each other and thus a bound portion by each binding tool 40 may be thinnest. On the other hand, when the thicknesses of the bundles of wires 30 vary, a thickness of each bound portion is determined according to a diameter of the thickest bundle of wires 30. Therefore, thin wires 30 may also be repeatedly bound.

The binding tools 40 have a straight extended shape, and a shape curved or bent about an extension direction of the wire 30. Here, the curved shape is a shape in which one binding tool 40 is curved as a whole at a relatively large curvature, and the bent shape is a shape in which a portion of one binding tool 40, for example, a central portion thereof is curved at a relatively small curvature.

The binding tools 40 having a straight extended shape are attached to a flat portion (for instance, a rear surface) of the inner case 11. On the other hand, the binding tools 40 having a curved or bent shape are attached to a corner portion, at which two surfaces (for instance, rear and side surfaces) of the inner case 11 intersect, so as to wrap the corner portion. That is, bent states of the binding tools 40 depend on the shape of the corner portion of the inner case 11 to which the binding tools 40 are attached.

Moreover, various means such as glue, adhesive by an adhesive tape, and fastening screws are used as an attachment means of each binding tool 40, but any of them may also be adopted.

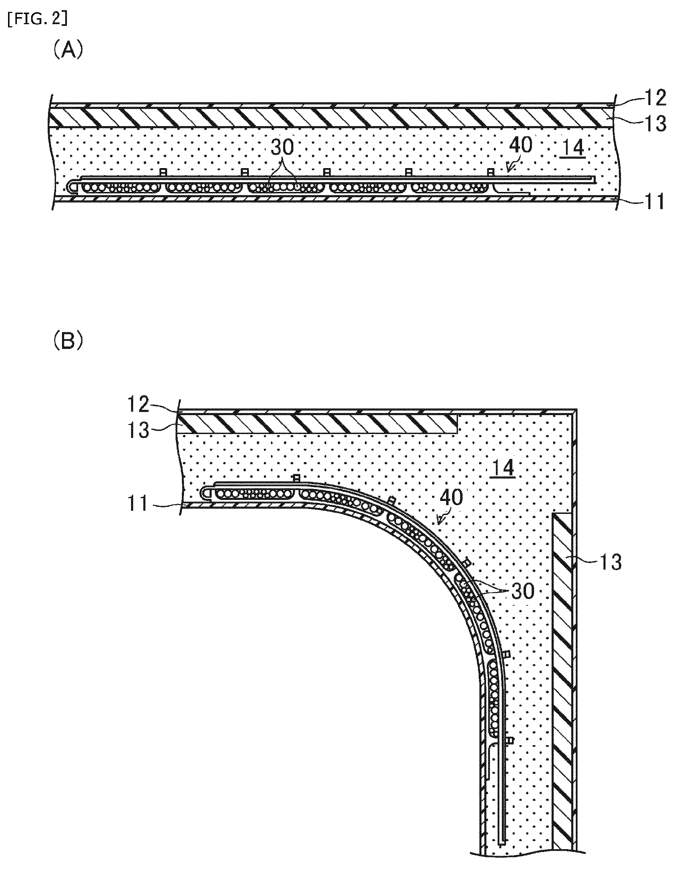

FIG. 2 shows a cross section of the refrigerator according to the embodiment of the present invention. FIG. 2(A) shows an enlarged cross section of the flat portion of the inner case 11, and FIG. 2(B) shows an enlarged cross section of the corner portion of the inner case 11. In the embodiment, a VIP 13 with a thickness of several mm is attached to an inner surface of the outer case 12 and a gap between the inner case 11 and the VIP 13 is 22 mm. In addition, the corner portion of the inner case 11 has a shape rounded at a radius of curvature with a proper size. As the wires 30, for example, AWG 26 and AWG 20 as AWG (American Wire Gauge) conversion values are mixed in plural numbers.

When the wires 30 are bound and rounded, a diameter of a bundle of wires 30 is nearly equal to a thickness of a foam insulation material 14 and a flow channel of urethane foam is inhibited during injection of the urethane foam, thereby generating a void. On the other hand, in the embodiment, the wires 30 are bound and flattened to be thinnest by the binding tools 40, and a bundle of wires 30 has a thickness of several mm. Accordingly, the urethane foam is injected into the space between the inner case 11 and the outer case 12 without inhibition of injection, and thus generation of the void may be prevented. In addition, the foam insulation material 14 may have a thickness of several tens of mm even in a position of the thinnest portion thereof, and thus heat insulation efficiency may be favorably maintained.

Each binding tool 40 may also be made of a hardened synthetic resin so as not to be easily deformable, or may also be made of a flexible material such as polyacetal or polyamide so as to be easily deformable when attached to the inner case 11. In the latter case, when the wire harness 20 is attached to the inner case 11, the binding tool 40 may be freely deformed according to the shape of an attached position. In addition, the binding tool 40 may also be formed by processing a thermoplastic resin sheet in a laminating manner.

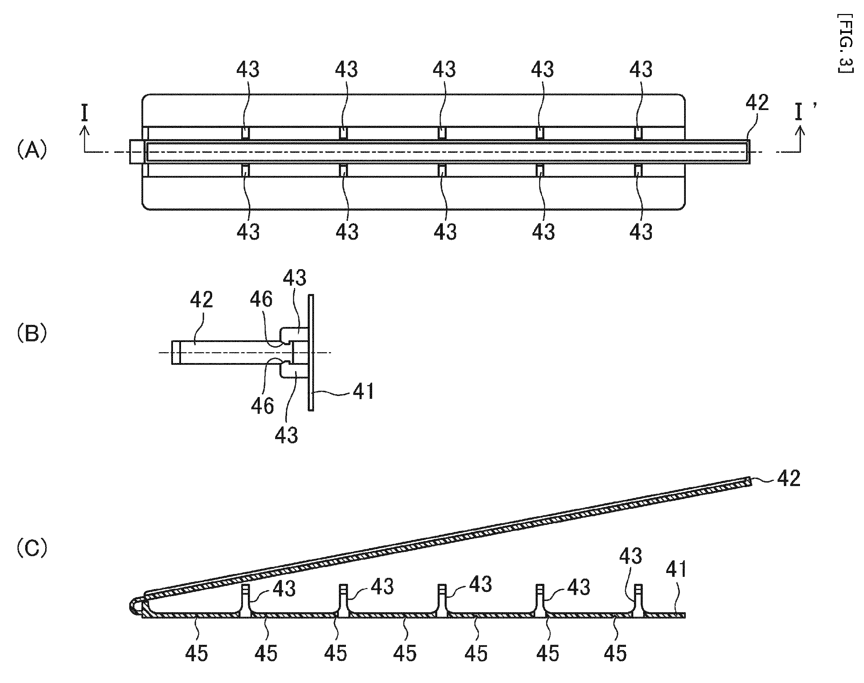

FIG. 3 shows an example of one binding tool 40 made of a flexible material. FIG. 3(A) is a top view of the binding tool 40, FIG. 3(B) is a side view of the binding tool 40 when viewed from "I"' of FIG. 3(A), and FIG. 3(C) is a cross-sectional view taken along "I-I"' of FIG. 3(A). The binding tool 40 consists of a base portion 41, a tie portion 42, and hook portions 43. A plurality of wires (not shown) is interposed between the base portion 41 and the tie portion 42. The base portion 41 is made of a flexible material and has a plate shape. Notches 45 may also be provided on a back surface of the base portion 41 at proper intervals in order to easily bend the base portion 41. In addition, a double-sided tape may also be adhered to the back surface of the base portion 41 in order to easily attach the base portion 41 to the inner case 11.

The tie portion 42 is made of a flexible material and has a long shape. One end of the tie portion 42 is integrally formed with one end of the base portion 41.

Each hook portion 43 is provided on a surface of the base portion 41 to protrude in a vertical direction in planar view. Hooks 46 are provided at upper ends of the hook portion 43. The hooks 46 are caught by both ends of the tie portion 42 in a width direction thereof so as to suppress the tie portion 42 from being separated in the vertical direction of the base portion 41 in planar view. Thus, the wires are interposed between the base portion 41 and the tie portion 42.

In addition, the hook portion 43 serves as "partition" which prevents the wires interposed between the base portion 41 and the tie portion 42 from shifting in a longitudinal direction of the base portion 41. The hook portion 43 is configured of at least one hook portion to hook the tie portion 42 in at least one position thereof (to hook the tie portion 42 in five positions thereof in an example of FIG. 3). Therefore, the wires are partitioned into the number of proper wires and thus may be stably bound. Particularly, this is advantageous in a case in which the number of wires is small.

In addition, the tie portion 42 is configured to be slidable in an extension direction even when the tie portion 42 is hooked at the hook portion 43. That is, the tie portion 42 is configured to be freely movable in the extension direction in a state in which the wires are interposed between the base portion 41 and the tie portion 42. Consequently, the binding tool 40 may be freely bent in a state of binding the wires. This is advantageous in a case in which the binding tool 40 is bent according to the shape of a curved surface such as the corner portion of the inner case 11 to be attached to the inner case 11.

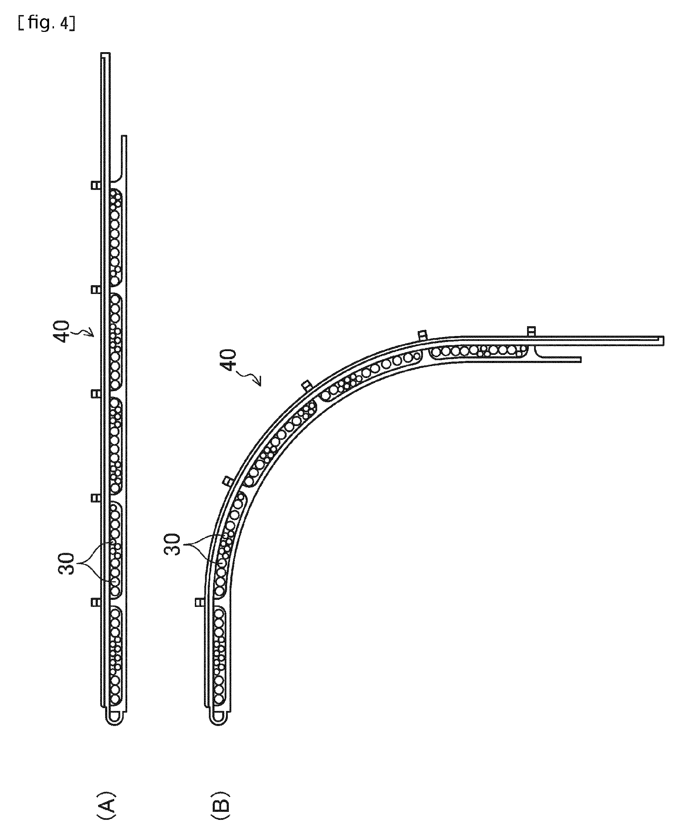

FIG. 4 schematically shows a use state of the binding tool 40 in FIG. 3. FIG. 4(A) shows an example of a case in which the binding tool 40 is used in a straight extended state, and FIG. 4(B) shows an example of a case in which the binding tool 40 is used in a bent state. Regardless of the state in which the binding tool is used, the wires 30 are bound and flattened by the binding tool 40 so as not to easily shift.

In accordance with the embodiment as described above, the wire harness 20 may be configured at relatively low cost without using a specific member. In addition, since the wires 30 are bound and flattened by the binding tools 40, foaming defects such as a void may be eliminated by sufficiently securing the flow channel of urethane foam when the heat insulation layer is formed. Furthermore, the wires 30 may be arranged at the corner portion of the inner case 12 without provision of grooves and chamfering of the corner portion. Accordingly, according to the embodiment, the internal volume ratio and heat insulation efficiency of the refrigerator may be improved at relatively low cost.

Various embodiments have been described in the best mode for carrying out the invention. Although the preferred embodiments of the present invention have been disclosed for illustrative purposes, those skilled in the art will appreciate that various modifications, additions and substitutions are possible, without departing from the scope of the invention as disclosed in the accompanying claims.

### [Industrial Applicability]

In a refrigerator according to the present invention, since an internal volume ratio and heat insulation efficiency of the refrigerator may be improved at relatively low cost, the refrigerator is useful as a refrigerator for home and business, a freezer, or the like.

### [Reference Signs List]

11: inner case
12: outer case
14: foam insulation material
20: urethane foam
30: wire
40: binding tool
41: base portion
42: tie portion
43: hook portion

## Claims

1. A refrigerator comprising:
an inner case (11) and an outer case (12) configured to form a cabinet; and
a wire harness (20) which is interposed between the inner case and the outer case and formed by a plurality of wires (30) being bound together,
wherein the wire harness comprises at least one binding tool (40) which binds the plurality of wires so that the plurality of wires are disposed in a flat manner with respect to an outer surface of the inner case and is in contact with the outer surface of the inner case,
wherein the at least one binding tool comprises:
a base portion (41), wherein the base portion is in contact with the outer surface with no space therebetween;
a tie portion (42) disposed near the base portion to be spaced apart from the base portion,
wherein the plurality of wires are disposed in a space formed by the base portion and the tie portion; and
wherein the tie portion (42) extends from one end of the base portion (41) to be integrally formed with the base portion, and the tie portion and the base portion are deformed to be in shapes corresponding to each other such that the plurality of wires are interposed between the tie portion and the base portion.

2. The refrigerator of claim 1, wherein the at least one binding tool is provided to be bent with respect to an extension direction of the plurality of wires as an axis.

3. The refrigerator of claim 1, wherein the inner case comprises a corner portion of which an outer surface is formed to be bent, and the at least one binding tool is provided to correspond to an outer surface of the corner portion.

4. The refrigerator of claim 3, wherein the binding tool is in contact with the outer surface of the corner portion with no space therebetween.

5. The refrigerator of any one of the preceding claims, wherein the base portion and the tie portion are provided in parallel with each other.

6. The refrigerator of any one of the preceding claims, wherein the tie portion extends from one end of the base portion and is integrally formed with the base portion.

7. The refrigerator of claim 5, wherein the binding tool further comprises at least one hook portion (43) protruding in an upper direction of the base portion and configured to hook the tie portion.

8. The refrigerator of any one of the preceding claims, wherein the plurality of hook portions are restricted from separating in a longitudinal direction of or perpendicular direction to the tie portion in a state in which the tie portion is movable in the longitudinal direction of the tie portion.

9. The refrigerator of any one of the preceding claims, wherein the plurality of hook portions divide a space formed by the base portion and the tie portion so that the plurality of wires are divided and bound.

10. The refrigerator of claim 1, wherein the binding tool comprises a flexible material.

11. The refrigerator of any one of the preceding claims, wherein the base portion comprises a flexible material, and is deformable corresponding to a shape of a portion in which the base portion is in contact with the outer surface of the inner case.

12. The refrigerator of claim 1, wherein the wire harness is embedded between the inner case and the outer case along with an insulation material which foams between the inner case and the outer case.

## Patentansprüche

1. Kühlschrank, der Folgendes umfasst:
ein inneres Gehäuse (11) und ein äußeres Gehäuse (12), die dazu konfiguriert sind, einen Schrank zu bilden; und
einen Kabelbaum (20), der zwischen dem inneren Gehäuse und dem äußeren Gehäuse angeordnet ist und von einer Vielzahl von Drähten (30), die zusammengebunden sind, gebildet wird,
wobei der Kabelbaum mindestens ein Bindewerkzeug (40) umfasst, das die Vielzahl von Drähten bindet, sodass die Vielzahl von Drähten auf flache Weise in Bezug auf eine äußere Oberfläche des inneren Gehäuses angeordnet ist und sich mit der äußeren Oberfläche des inneren Gehäuses in Kontakt befindet,
wobei das mindestens eine Bindewerkzeug Folgendes umfasst:
einen Basisabschnitt (41), wobei sich der Basisabschnitt ohne Zwischenraum dazwischen mit der äußeren Oberfläche in Kontakt befindet;
einen Binderabschnitt (42), der in der Nähe des Basisabschnitts angeordnet ist, um von dem Basisabschnitt beabstandet zu sein,
wobei die Vielzahl von Drähten in einem von dem Basisabschnitt und dem Binderabschnitt gebildeten Zwischenraum angeordnet ist; und
wobei sich der Binderabschnitt (42) von einem Ende des Basisabschnitts (41) erstreckt, um integral mit dem Basisabschnitt gebildet zu sein und der Binderabschnitt und der Basisabschnitt verformt sind, um einander entsprechende Formen aufzuweisen, sodass die Vielzahl von Drähten zwischen dem Binderabschnitt und dem Basisabschnitt angeordnet ist.

2. Kühlschrank nach Anspruch 1, wobei das mindestens eine Bindewerkzeug bereitgestellt ist, um in Bezug auf eine Erstreckungsrichtung der Vielzahl von Drähten als Achse gebogen zu sein.

3. Kühlschrank nach Anspruch 1, wobei das innere Gehäuse einen Eckabschnitt umfasst, wobei eine äußere Oberfläche desselben dazu gebildet ist, gebogen zu sein und das mindestens eine Bindewerkzeug bereitgestellt ist, um einer äußeren Oberfläche des Eckabschnitts zu entsprechen.

4. Kühlschrank nach Anspruch 3, wobei sich das Bindewerkzeug ohne Zwischenraum dazwischen mit der äußeren Oberfläche des Eckabschnitts in Kontakt befindet.

5. Kühlschrank nach einem der vorangehenden Ansprüche, wobei der Basisabschnitt und der Binderabschnitt parallel zueinander bereitgestellt sind.

6. Kühlschrank nach einem der vorangehenden Ansprüche, wobei sich der Binderabschnitt von einem Ende des Basisabschnitts erstreckt und integral mit dem Basisabschnitt gebildet ist.

7. Kühlschrank nach Anspruch 5, wobei das Bindewerkzeug weiter mindestens einen Hakenabschnitt (43) umfasst, der in einer oberen Richtung des Basisabschnitts vorsteht und dazu konfiguriert ist, den Binderabschnitt zu haken.

8. Kühlschrank nach einem der vorangehenden Ansprüche, wobei die Vielzahl von Hakenabschnitten in einem Zustand, in dem der Binderabschnitt in der Längsrichtung des Binderabschnitts beweglich ist, daran gehindert werden, sich in einer Längsrichtung des Binderabschnitts oder einer dazu senkrechten Richtung abzulösen.

9. Kühlschrank nach einem der vorangehenden Ansprüche, wobei die Vielzahl von Hakenabschnitten einen von dem Basisabschnitt und dem Binderabschnitt gebildeten Zwischenraum teilt, sodass die Vielzahl von Drähten geteilt und gebunden wird.

10. Kühlschrank nach Anspruch 1, wobei das Bindewerkzeug ein biegsames Material umfasst.

11. Kühlschrank nach einem der vorangehenden Ansprüche, wobei der Basisabschnitt ein biegsames Material umfasst und entsprechend einer Form eines Abschnitts, in dem sich der Basisabschnitt mit der äußeren Oberfläche des inneren Gehäuses in Kontakt befindet, verformbar ist.

12. Kühlschrank nach Anspruch 1, wobei der Kabelbaum zusammen mit einem Isoliermaterial, das zwischen dem inneren Gehäuse und dem äußeren Gehäuse schäumt, zwischen dem inneren Gehäuse und dem äußeren Gehäuse eingebettet ist.

## Revendications

1. Réfrigérateur comprenant :
une caisse intérieure (11) et une caisse extérieure (12) configurées pour former une armoire ; et
un faisceau de fils (20) qui est interposé entre la caisse intérieure et la caisse extérieure et qui est formé par une pluralité de fils (30) liés les uns aux autres,
dans lequel le faisceau de fils comprend au moins un moyen de liaison (40) qui lie la pluralité de fils de telle façon que les fils de ladite pluralité sont disposés à plat par rapport à une surface extérieure de la caisse intérieure et qui est en contact avec la surface extérieure de la caisse intérieure,
dans lequel ledit au moins un moyen de liaison comprend :
une partie de base (41), laquelle partie de base est en contact avec la surface extérieure sans espace entre elles ;
une partie d'attache (42) disposée au voisinage de la partie de base de façon à être espacée de ladite partie de base,
dans lequel la pluralité de fils est disposée dans un espace formé par la partie de base et la partie d'attache ; et
dans lequel la partie d'attache (42) s'étend depuis une extrémité de la partie de base (41) de façon à être formée d'un seul tenant avec la partie de base, et la partie d'attache et la partie de base sont déformées de façon à prendre des formes qui correspondent l'une à l'autre de telle sorte que la pluralité de fils est interposée entre la partie d'attache et la partie de base.

2. Réfrigérateur selon la revendication 1, dans lequel ledit au moins un moyen de liaison est prévu pour être replié par rapport à une direction, prise comme axe, dans laquelle la pluralité de fils s'étend.

3. Réfrigérateur selon la revendication 1, dans lequel la caisse intérieure comprend une partie d'angle dont une surface extérieure est réalisée avec une forme incurvée, et ledit au moins un moyen de liaison est disposé de façon à correspondre à une surface extérieure de la partie d'angle.

4. Réfrigérateur selon la revendication 3, dans lequel le moyen de liaison est en contact avec la surface extérieure de la partie d'angle sans espace entre eux.

5. Réfrigérateur selon l'une quelconque des revendications précédentes, dans lequel la partie de base et la partie d'attache sont disposées parallèles l'une à l'autre.

6. Réfrigérateur selon l'une quelconque des revendications précédentes, dans lequel la partie d'attache s'étend depuis une extrémité de la partie de base et est formée d'un seul tenant avec la partie de base.

7. Réfrigérateur selon la revendication 5, dans lequel le moyen de liaison comprend en outre au moins une partie formant crochet (43) qui dépasse de la partie de base dans une direction vers le haut et qui est configurée pour accrocher la partie d'attache.

8. Réfrigérateur selon l'une quelconque des revendications précédentes, dans lequel la pluralité de parties formant crochets est empêchée de se séparer dans une direction longitudinale de la partie d'attache ou dans une direction perpendiculaire à celle-ci dans un état dans lequel la partie d'attache est mobile dans la direction longitudinale de la partie d'attache.

9. Réfrigérateur selon l'une quelconque des revendications précédentes, dans lequel la pluralité de parties formant crochets divise un espace formé par la partie de base et la partie d'attache de telle façon que la pluralité de fils est divisée et liée.

10. Réfrigérateur selon la revendication 1, dans lequel le moyen de liaison comprend un matériau flexible.

11. Réfrigérateur selon l'une quelconque des revendications précédentes, dans lequel la partie de base comprend un matériau flexible et est déformable pour correspondre à une forme d'une partie dans laquelle la partie de base est en contact avec la surface extérieure de la caisse intérieure.

12. Réfrigérateur selon la revendication 1, dans lequel le faisceau de fils est noyé sur toute sa longueur entre la caisse intérieure et la caisse extérieure dans un matériau isolant expansé entre la caisse intérieure et la caisse extérieure.
